# EUROPEAN PATENT APPLICATION

(11) **EP 2 544 266 A1**
(43) Date of publication of application: **09.01.2013**
(21) Application number: 11750670.9
(22) Date of filing: 02.03.2011
(51) Int. Cl.: H01M 4/04

(54) **ELECTRODE MANUFACTURING EQUIPMENT**

(30) Priority: 03.03.2010 JP 2010047049
(71) Applicant: Mitsubishi Heavy Industries, Ltd., Tokyo 108-8215 (JP)
(72) Inventor: NOZAKI, Akihiro, Tokyo 108-8215 (JP); IMASAKA, Koji, Tokyo 108-8215 (JP); TANAKA, Atsushi, Tokyo 108-8215 (JP)
(74) Representative: Henkel, Breuer & Partner
(86) International application number: PCT/JP2011/054687
(87) International publication number: WO 2011/108561

(57) **Abstract**

Provided is an electrode manufacturing apparatus having a manufacturing unit mixing a plurality of materials and manufacturing an electrode slurry, a reservoir tank connected to the manufacturing unit and storing the manufactured electrode slurry that is manufactured, a coarse particle removal filter connected to the reservoir tank and removing coarse particles in a stored electrode slurry, a defoamer connected to the coarse particle removal filter and removing bubbles in the electrode slurry from which the coarse particles are removed and then returning the electrode slurry, from which the bubbles are removed, to a position below a liquid level of the electrode slurry stored in the reservoir tank, and a coating unit connected to the reservoir tank and coating the stored electrode slurry to a base material.

## Description

### Technical Field

The present invention relates to an electrode manufacturing apparatus.
Priority is claimed on Japanese Patent Application No. 2010-047049 filed on March 3, 2010, the contents of which are incorporated herein by reference.

### Background Art

Generally, electrodes of a secondary battery or the like, are manufactured by coating an electrode slurry, which is obtained by mixing a plurality of materials (an electrode active material, a binding agent, a solvent, and the like) into slurry, onto a charge collector having aluminum, copper, or the like as a base material, using a die head or the like, and drying the coated electrode slurry.

By the way, when removal of coarse particles (aggregates) and bubbles contained in the electrode slurry is inadequate, electrode defects, such as streaks, voids, blow holes, and flaking, occur in an electrode layer after drying, which becomes a cause of degradation of battery performance.

In the conventional technology, in order to remove the bubbles contained in the electrode slurry, the electrode slurry after mixing is defoamed in a vacuum, and the coarse particles contained in the electrode slurry that has been defoamed in a vacuum are filtered with a filter, to perform the coating (for example, the following Patent Document 1).

### Citation List

### [Prior Art Document]

[Patent Document 1] Japanese Unexamined Patent Application, First Publication No. H11-213990

### Summary of Invention

### Problem to be Solved by the Invention

However, if an actual operation is tried according to the conventional technology, transfer to a temporary storage or coating process of a slurry, from which coarse particles are removed or which are defoamed in a vacuum, is involved. Therefore, there is a problem in that the properties of the slurry will degrade again due to re-generation of coarse particles by re-aggregation or entrainment of bubbles.
If a vacuum defoamer is assembled into a feed system in the coating process, the overall feed system is decompressed, whereby a flow rate change in the die head becomes large. As a result, since it is difficult to coat the slurry to the charge collector with a uniform film thickness, coating should be stopped when vacuum defoaming is performed.
Moreover, if a filter is assembled into the feed system, bubbles will again be entrained when the filter clogged with coarse particles is replaced. Therefore, there is a problem in that an electrode slurry containing bubbles will eventually be coated on the charge collector, and electrode defects will occur.

The invention has been made in consideration of such circumstances, and an object thereof is to provide an electrode manufacturing apparatus that can efficiently remove coarse particles and bubbles contained in an electrode slurry and can suppress electrode defects.

### Means for solving the Problem

In order to achieve the above object, the invention adopts the following means.
That is, an electrode manufacturing apparatus related to the invention has a manufacturing unit mixing a plurality of materials and manufacturing an electrode slurry, a reservoir tank connected to the manufacturing unit and storing the manufactured electrode slurry that is manufactured, a coarse particle removal filter connected to the reservoir tank and removing coarse particles in the stored electrode slurry, a defoamer connected to the coarse particle removal filter and removing bubbles in the electrode slurry from which the coarse particles are removed and then returning the electrode slurry, from which the bubbles are removed, to a position below the liquid level of the electrode slurry stored in the reservoir tank, and a coating unit connected to the reservoir tank and coating the stored electrode slurry to a base material.
According to this configuration, the circulatory system having the coarse particle removal filter and the defoamer is provided at the reservoir tank. Thus, not only bubbles, which are mixed when the electrode slurry is transferred to the reservoir tank from the manufacturing unit or when the electrode slurry is stored in the reservoir tank, and coarse particles, which are generated during reservation, can be removed, but also bubbles which are generated when this coarse particle removal filter is replaced, are removed by the defoamer, and are returned to the reservoir tank (returned to a position below the liquid level of the stored electrode slurry so that bubbles are not newly generated, when returning). Thus, the stored electrode slurry is turned into an electrode slurry having excellent properties, in which bubbles and coarse particles are not almost contained.
Thereby, since bubbles and coarse particles are continuously and repeatedly removed by circulating the electrode slurry, an electrode slurry having excellent properties, in which bubbles and coarse particles are not almost contained, can be coated on the base material, and electrode defects, such as streaks, voids, and flaking, can be suppressed.

### Effects of the Invention

According to the electrode manufacturing apparatus related to the invention, coarse particles and bubbles to be contained in an electrode slurry to be coated on a base material for manufacturing an electrode can be removed efficiently, and electrode defects can be suppressed.

### Brief Description of Drawings

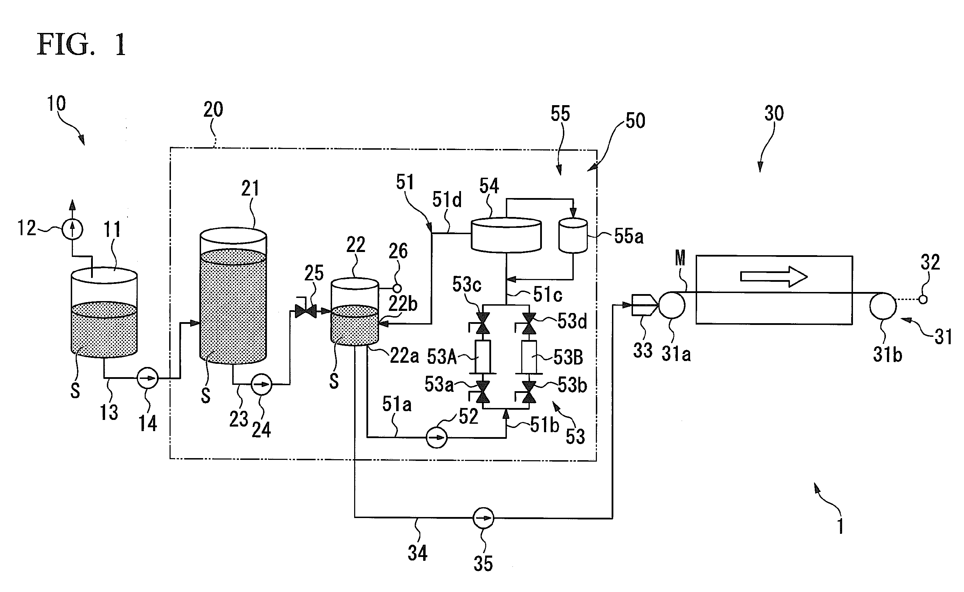

Fig. 1 is a schematic configuration view of an electrode manufacturing apparatus 1 related to an embodiment of the invention.

### Description of Embodiments

An embodiment of the invention will be described below with reference to the drawings.
Fig. 1 is a schematic configuration view of an electrode manufacturing apparatus 1 related to the embodiment of the invention.
First, the basic configuration of the electrode manufacturing apparatus 1 will be described. As shown in Fig. 1, the electrode manufacturing apparatus 1 includes a manufacturing unit 10, a storage unit 20, and a coating unit 30.

The manufacturing unit 10 mixes an electrode active material, a conductive material, a binding agent, and a solvent into a slurry, and manufactures an electrode slurry S. The manufacturing unit 10 includes a mixing tank 11 and a vacuum pump 12, and defoams the electrode slurry S, which is manufactured in the mixing tank 11, in a vacuum by the vacuum pump 12.

The storage unit 20 is connected to the manufacturing unit 10 and the coating unit 30, stores or reserves the electrode slurry S, and includes a primary reservoir tank 21 and a feed tank 22, as a reservoir tank.
The primary reservoir tank 21 is connected to the mixing tank 11 through a conduit 13 and a pump 14, and stores the electrode slurry S transferred from the mixing tank 11.

The feed tank 22 is small (for example, 10 liters) compared to the primary reservoir tank 21 (for example, 100 liters). The feed tank 22 is connected to the primary reservoir tank 21 through a conduit 23, a pump 24, and a valve 25, and the electrode slurry S is transferred to the feed tank from the primary reservoir tank 21. The electrode slurry S transferred to and stored in the feed tank 22 is coated on a base material M by the coating unit 30 including a coating head (die head or the like) to be described below.
A liquid level sensor 26 that detects the liquid level within the feed tank 22 is provided at the feed tank 22, and is controlled so that the liquid level of the electrode slurry S becomes a predetermined range. Specifically, a control unit (not shown) controls the operation or stop of the pump 24 and the opening or closing of the valve 25, based on the detection result of the liquid level sensor 26, and is controlled so as to suitably replenish with the electrode slurry S containing the coarse particles or bubbles manufactured in the manufacturing unit 10 through the primary reservoir tank 21 so as to become a predetermined range, when the liquid level of the electrode slurry S within the feed tank 22 becomes low due to coating.
During the above replenishment, the transfer of the electrode slurry S from the primary reservoir tank 21 to the feed tank 22 is performed in a state where supply of the electrode slurry S within the below-mentioned coating unit to the feed tank 22 is stopped. Then, the electrode slurry S within the feed tank 22 begins to be supplied to the coating unit 30 after being circulated in a circulatory system to be described below for a predetermined time.

The coating unit 30 coats the electrode slurry S on the base material M, and then dries the electrode slurry, and includes a transporting device 31, a dryer (not shown), a film thickness sensor 32, and a coating head 33.
The transporting device 31 includes two transporting rolls 31 a and 31b, and transports a sheet-shaped base material M in one direction between the transporting rolls 31a and 1b.
The dryer (not shown) dries the electrode slurry S coated on the base material M, and forms an electrode layer on the surface of the base material M.
The film thickness sensor 32 is provided on the transporting roll 31b side where the base material M is wound up, and detects the thickness of an electrode layer using light.

The coating head 33 is provided on the transporting roll 31a side that delivers the base material M, and coats the electrode slurry S on the base material M. The coating head 33 is connected to the feed tank 22 through a conduit 34 and a pump 35.
In the coating head 33, the discharge amount of the electrode slurry S is controlled so that the thickness of the electrode layer after drying becomes a predetermined thickness. Specifically, the control unit (not shown) controls the flow rate of the pump 35 to control the discharge amount of the electrode slurry S based on the detection result of the film thickness sensor 32.

The electrode manufacturing apparatus 1 having the above basic configuration includes a circulatory system 50 as shown in Fig. 1.
The circulatory system 50 is provided at the feed tank 22 of the storage unit 20, and circulates the electrode slurry S stored in the feed tank 22. The circulatory system 50 has a conduit 51, a pump 52, a filter unit 53, a centrifugal defoamer 54, and a sub-circulation unit 55.
As the electrode slurry S stored in the feed tank 22 circulates more through a circulatory system including the feed tank 22, the filter unit 53, and the centrifugal defoamer 54 in the circulatory system 50, an electrode slurry having satisfactory properties, from which more coarse particles or bubbles are removed, can be obtained. For this reason, a high-quality electrode can be manufactured by performing coating after the electrode slurry S stored in the feed tank 22, is passed through this circulatory system for a predetermined time (for example, for 30 minutes), that is, substantially multiple times. Of course, the number of times by which the electrode slurry S is passed through this circulatory system can be changed according to designs, and in some cases, the electrode slurry may be passed through the circulatory system only once.
After the electrode slurry is passed through the circulatory system for a predetermined time, the circulation of the circulatory system may be stopped and coating may be performed, or coating may be performed, passing the electrode slurry through the circulatory system. This is because, if circulation is performed at least by the number of times required for the design, coating can be made with a slurry having designed properties or excellent properties more than the designed properties by the coating unit 30.

The conduit 51 includes a conduit 51a that connects between an upstream opening 22a arranged near the bottom face of the feed tank 22 and the pump 52, a conduit 51 b that connects the pump 52 and the filter unit 53, a conduit 51c that connect the filter unit 53 and the centrifugal defoamer 54, a conduit 51d that connects the centrifugal defoamer 54, and a downstream opening 22b in the wall surface of the feed tank 22, which is arranged at an upper position relatively apart from the bottom face.
The upstream opening 22a opens to the bottom of the feed tank 22 as described above. On the other hand, the downstream opening 22b opens to a position below the liquid level (predetermined range) of the stored electrode slurry S, in the inner side wall portion of the feed tank 22.
However, when the electrode slurry S passed through the circulatory system 50 is returned to the feed tank 22, it is desirable if the electrode slurry hits the liquid surface of the stored electrode slurry S and new bubbles are not generated. Thus, the downstream opening 22b may open to a position above the liquid level of the stored electrode slurry S, in the inner side wall portion of the feed tank 22. In this case, for example, one opening is connected to the downstream opening 22b, and a pipe in which another opening is arranged at a position below the liquid level of the stored electrode slurry S is provided inside the feed tank 22.

The filter unit 53 includes two coarse particle removal filters 53A and 53B that are disposed in parallel, and four valves 53a to 53d as a switching unit that are respectively disposed on the upstream and downstream of the two coarse particle removal filters 53A and 53B. By adjusting the switching unit suitably, the circulatory system 50 can be formed only via any one of the two coarse particle removal filters 53A and 53B. For example, when the coarse particle removal filter 53A is assembled into the circulatory system 50 to perform coarse particle removal, switching to the coarse particle removal filter 53B can be made immediately by the switching unit to continue the flow of the circulatory system 50 in a case where clogging has occurred and the need for replacement has occurred. Thus, productivity can be improved. In addition, in this case, the coarse particle removal filter 53A is replaced after the above switching.
The switching unit may be controlled so as to be automatically switched by the control unit (not shown) after passing a predetermined time.

The coarse particle removal filters 53A and 53B include mesh filters, and traps coarse particles contained in the electrode slurry S. For example, since the slot width of the die head is generally 200 to 500 µm, if the meshes of the mesh filter are set to about 150 µm, coarse particles can be trapped sufficiently.

The centrifugal defoamer 54 causes a centrifugal force to act on the electrode slurry S through the rotation thereof, and perform defoaming by this centrifugal force. More specifically, the centrifugal defoamer 54 collects bubbles with lower specific gravity compared to the electrode slurry S toward the center of rotation, discharges a bubble phase from a center-side discharge portion that opens toward the center, and discharges a liquid phase from an outer-peripheral-side discharge portion that opens to the outer peripheral side. Defoaming is performed so that about one bubble per 10 ml of the electrode slurry, preferably, about one bubble per 100 ml is generated.
As the rotational frequency of this centrifugal defoamer 54, a rotational frequency is used such that an electrode active material, a solvent, and a binding agent contained in the electrode slurry S are not separated form each other by a centrifugal force.

The sub-circulation unit 55 puts the electrode slurry S, containing the bubbles discharged from the center-side discharge portion of the centrifugal defoamer 54, into a collection tank 55a, and collects the bubbles, and returns the electrode slurry S, to which the bubbles are collected, to the conduit 51c.

Next, the operation of the electrode manufacturing apparatus 1 having the above configuration will be described.
First, in the mixing tank 11, an electrode slurry S is manufactured by mixing an electrode active material, a binding agent, and a solvent. In this case, bubbles mixed in the electrode slurry S by the mixing are defoamed in a vacuum by the vacuum pump 12. In addition, the amount of the solvent during the above mixing is an amount obtained in consideration of evaporation by the vacuum defoaming.

Next, the electrode slurry S within the mixing tank 11 is transferred to the primary reservoir tank 21 through the conduit 13 and the pump 14. In this transfer, bubbles are slightly mixed in the electrode slurry S.

Then, the electrode slurry S in which bubbles are mixed slightly is stored in the primary reservoir tank 21. During this storage, aggregation proceeds with time, and coarse particles are generated in the electrode slurry S.
Bubbles are mixed in the electrode slurry S due to external vibration or the like.

When the liquid level of the feed tank 22 is less than a predetermined range, the control unit (not shown) controls the operation or stop of the pump 24 and the opening or closing of the valve 25, and transfers the electrode slurry S to the feed tank 22 from the primary reservoir tank 21. Even in this transfer, bubbles are slightly mixed in the electrode slurry S.
Then, the electrode slurry S in which bubbles are mixed and coarse particles are contained is once stored in the feed tank 22.

The electrode slurry S that is once stored in the feed tank 22 in this way flows into the conduit 51a from the upstream opening 22a, and passes through one of the coarse particle removal filters 53A and 53B of the filter unit 53 through the pump 52. During this passage, the coarse particle removal filter 53A or the coarse particle removal filter 53B traps the coarse particles generated in the primary reservoir tank 21.

The electrode slurry S, from which the coarse particles are removed by the filter unit 53, flows into the centrifugal defoamer 54.
The centrifugal defoamer 54 collects and separates the bubbles contained in the electrode slurry S at the center, discharges a bubble phase from the center-side discharge portion, and discharges a liquid phase from the outer-peripheral-side discharge portion.
After the electrode slurry S discharged from the center-side discharge portion is collected in the collection tank 55a, the electrode slurry is returned to the conduit 51c, and flows again into the centrifugal defoamer 54.
On the other hand, the electrode slurry S, which is discharged from the outer-peripheral-side discharge portion of the centrifugal defoamer 54 and from which bubbles has been removed, flows again into the feed tank 22 from the downstream opening 22b via the conduit 51d.
As the electrode slurry S circulates through the circulatory system 50 continuously in this way, coarse particles and bubbles are almost removed and the properties of the electrode slurry S are recovered.

The electrode slurry S of which the properties are recovered is supplied to the coating unit 30, and is coated on the base material M. Coarse particle and bubbles are not almost contained in the coated electrode slurry S, and an electrode loss hardly occurs.
Additionally, when the electrode slurry S is coated on the base material M, the discharge amount of the electrode slurry S from the coating head 33 is controlled strictly. That is, since the liquid level of the feed tank 22 is controlled to a predetermined range, the fluctuation range of head pressure is restricted, and the circulatory system 50 is provided independently with the conduit 34 and the pump 35, the control of the discharge amount of the electrode slurry S of the coating head 33 is strictly controlled through the control of flow of the pump 35. An electrode in which the thickness of an electrode layer becomes uniform is obtained by such strict control.

As described above, according to the electrode manufacturing apparatus 1, the circulatory system 50 having the coarse particle removal filters 53A and 53B and the centrifugal defoamer 54 is provided at the storage unit 20. Thus, even if bubbles are mixed in the electrode slurry S during the transfer from the mixing tank 11 to the primary reservoir tank 21, during the transfer from the primary reservoir tank 21 to the feed tank 22, or during the storage in the primary reservoir tank 21, bubbles can be removed by the centrifugal defoamer 54.
Even if coarse particles are generated during the storage of the electrode slurry S in the primary reservoir tank 21, the coarse particles can be removed by the coarse particle removal filters 53A and 53B.
Thereby, since bubbles and coarse particles are continuously and repeatedly removed by circulating the electrode slurry S, an electrode slurry S having excellent properties, in which bubbles and coarse particles are not almost contained, can be coated on the base material M, and electrode defects, such as streaks, voids, and flaking, can be suppressed.

Here, although there is a pressure-reducing vacuum defoamer, an ultrasonic defoamer, a centrifugal defoamer, or the like as the defoamer, the solvent of the electrode slurry S may evaporate in the pressure-reducing vacuum defoamer, and the temperature of the electrode slurry S may rise in the ultrasonic defoamer. When the solvent evaporates, this may have influence on coating, and the temperature rise of the electrode slurry may change the properties of the electrode slurry that is a chemical substance. Accordingly, the centrifugal defoamer with little such influence or possibility is desirable. For this reason, the electrode manufacturing apparatus 1 of the present embodiment adopts the centrifugal defoamer.
Of course, any apparatuses other than the centrifugal defoamer can be adopted if the properties of an electrode slurry to coated are not affected.

Additionally, according to the electrode manufacturing apparatus 1, lengthening of the continuous operation time of a coating process and production capability can be improved.
That is, when a coarse particle removal filter is simply provided at the conduit 34 that supplies the electrode slurry S from the storage unit 20 to the coating unit 30, coating should be stopped during maintenance and production capability declines.
Additionally, even if coating is performed continuously during maintenance by providing coarse particle removal filters in parallel in the same place and switching and operating these filters, valve opening and closing, priming, air-bleeding, or the like in the conduit 34 at filter switching should be performed, and thus, strict control of the discharge amount of the electrode slurry S of the coating unit 30 cannot be performed. As a result, degradation (unevenness of the thickness of an electrode layer or the like) of the quality of a coating film will be caused.
However, according to the electrode manufacturing apparatus 1 of the present embodiment, the circulatory system 50 is provided at the feed tank 22 independently with the conduit 34. Thus, it is not necessary to stop coating even during the maintenance of the filter unit 53, and lengthening of continuous operation time and production capability can be improved.
Moreover, according to the electrode manufacturing apparatus 1 of the present embodiment, the circulatory system 50 is provided at the feed tank 22 independently with the conduit 34. Thus, the quality of a coating film can be kept constant without affecting strict control of the discharge amount of the coating unit 30.

Even if removal of coarse particles and bubbles is tried by optimization of manufacturing conditions or the like in a mixing process of the electrode slurry S, an electrode slurry, which has been mixed and manufactured in large quantities in the mixing tank in actual mass production, is subdivided into small tanks (for example, feed tanks), which are arranged nearby of a plurality of existing product lines, in small quantities. Thus, it is not easy to control the stability of the properties of the electrode slurry S strictly due to mixing of bubbles or the like.
However, according to the electrode manufacturing apparatus 1 of the present embodiment, coarse particles and bubbles are directly removed in the feed tank immediately before a coating process of actually manufacturing an electrode. Thus, effectiveness becomes high.

Since the plurality of coarse particle removal filters 53A and 53B are switchable, the circulation of the stored electrode slurry S can be continued even during maintenance, such as cleaning, and bubbles and coarse particles can always be removed. Thereby, an electrode slurry S having excellent properties can always be coated on the base material M.

Since the centrifugal defoamer 54 is provided on the downstream side of the coarse particle removal filters 53A and 53B, bubbles can be removed in the stage before an electrode slurry S containing bubbles that are mixed when passing through the coarse particle removal filters 53A and 53B immediately after cleaning are returned again to the feed tank 22, and workability or operability can be improved.

Since the sub-circulation unit 55 is provided, an electrode slurry S containing removed bubbles can be used effectively without being wasted.

Since the circulatory system 50 is provided at the feed tank 22 of which the liquid level has been controlled, when the electrode slurry S, to which defoaming and coarse particle are removed, to the feed tank 22, adjustment is easy so that bubbles or the like are not mixed. For this reason, an electrode slurry S having excellent properties, which has passed through the circulatory system 50, can be coated on the base material M.

Operation procedures or various shapes or combinations of respective constructional members shown in the above-described embodiment are merely examples, and various changes may be made based on design requirements or the like without departing from the spirit or scope of the invention.
For example, although the configuration in which vacuum defoaming is performed even in the manufacturing unit 10 has been adopted in the above-described embodiment, vacuum defoaming may not be performed or removable of bubbles may be performed by only the centrifugal defoamer 54.

### Industrial Applicability

According to the electrode manufacturing apparatus related to the invention, coarse particles and bubbles to be contained in an electrode slurry to be coated on a base material for manufacturing an electrode can be removed efficiently, and electrode defects can be suppressed.

### Reference Signs List

- 1:: ELECTRODE MANUFACTURING APPARATUS
- 10:: MANUFACTURE UNIT
- 20:: STORAGE UNIT
- 21:: PRIMARY RESERVOIR TANK
- 22:: FEED TANK
- 30:: COATING UNIT
- 33:: COATING HEAD
- 50:: CIRCULATORY SYSTEM
- 53A, 53B:: COARSE PARTICLE REMOVAL FILTER
- 54:: CENTRIFUGAL DEFOAMER
- 55:: SUB-CIRCULATION UNIT
- 55A:: COLLECTION TANK
- M:: BASE MATERIAL
- S:: ELECTRODE SLURRY

## Claims

1. An electrode manufacturing apparatus comprising:
a manufacturing unit mixing a plurality of materials and manufacturing an electrode slurry;
a reservoir tank connected to the manufacturing unit and storing the electrode slurry that is manufactured;
a coarse particle removal filter connected to the reservoir tank and removing coarse particles in a stored electrode slurry;
a defoamer connected to the coarse particle removal filter and removing bubbles in the electrode slurry from which the coarse particles are removed and then returning the electrode slurry, from which the bubbles are removed, to a position below a liquid level of the electrode slurry stored in the reservoir tank; and
a coating unit connected to the reservoir tank and coating the stored electrode slurry to a base material.

2. The electrode manufacturing apparatus according to Claim 1,
wherein the coating is performed with the stored electrode slurry in which a circulation through the reservoir tank, the coarse particle removal filter, and the defoamer is performed for a predetermined time.

3. The electrode manufacturing apparatus according to Claim 2, further comprising a switching unit,
wherein the coarse particle removal filter includes a first coarse particle removal filter and a second coarse particle removal filter to any of which switching is made by the switching unit, and
wherein the circulation is performed through either the first coarse particle removal filter or the second coarse particle removal filter switched by the switching unit.

4. The electrode manufacturing apparatus according to Claim 3, further comprising:
a liquid level sensor that detecting the liquid level of the stored electrode slurry; and
a control unit that receiving the result of the detection by the liquid level sensor,
wherein the control unit replenishes the reservoir tank with the electrode slurry manufactured by the manufacturing unit so as to fall within a predetermined range when the result of the detection showing that the liquid level is lower than the predetermined range is received.
